# EUROPÄISCHE PATENTSCHRIFT

(11) **EP 3 865 322 B1**
(45) Veröffentlichungstag und Bekanntmachung des Hinweises auf die Patenterteilung: **23.08.2023**
(21) Anmeldenummer: 20382096.4
(22) Anmeldetag: 12.02.2020
(51) Int. Cl.: B60G 7/00

(54) **CHASSIS-BAUTEIL**
CHASSIS COMPONENT
COMPOSANT DE CHÂSSIS

(43) Veröffentlichungstag der Anmeldung: 18.08.2021
(73) Patentinhaber: Gestamp Servicios, S.A., 28014 Madrid (ES); Autotech Engineering S.L., 48340 Amorebieta-Etxano (ES); Gestamp Umformtechnik GmbH, 33647 Bielefeld (DE); GESTAMP BIZKAIA, S.A., 48220 Abadiano, Vizcaya (ES); GESTAMP AVEIRO - INDÚSTRIA DE ACCESÓRIOS DE AUTOMÓVEIS, S.A., Oliveira de Azeméis, 3700 751 (PT)
(72) Erfinder: Domínguez Zarandona, Pedro, 48300 Gernika-Lumo, Bizkaia (ES); Piccini, Joaquin, 48940 Leioa, Bizkai (ES); Bilbao, Asier, 48200 Durango, Bizkaia (ES); Marín, Javier, 01002 Vitoria-Gasteiz (ES); Arroyo Llanos, Iñaki, 48130 Bakio (ES)
(74) Vertreter: Cohausz & Florack

(56) Entgegenhaltungen:
- EP-A1- 2 191 989
- EP-A2- 1 557 301
- WO-A1-2018/124601
- DE-A1- 10 007 193
- DE-A1- 10 053 411
- DE-A1-102008 056 271

## Beschreibung

Die Erfindung betrifft ein Chassis-Bauteil für ein Kraftfahrzeug, insbesondere in Form eines Fahrwerklenkers oder Hilfsrahmens, mit einer ersten aus umgeformtem Stahlblech gebildeten einstückigen Blechschale, die einen Steg und seitliche, gegenüber dem Steg abgewinkelte Flansche aufweist, wobei der von dem Steg und dem jeweiligen Flansch definierte Winkel im Wesentlichen im Bereich von 85° bis 95° liegt, wobei die Länge des jeweiligen Flansches ein Vielfaches seiner maximalen Höhe beträgt, und wobei der Steg im Bereich des jeweiligen Flansches eine Stegkante aufweist, und mit mindestens einer zweiten einstückigen Blechschale, die einen Steg und seitliche, gegenüber diesem Steg abgewinkelte Flansche aufweist, wobei der von dem Steg und dem jeweiligen Flansch der zweiten Blechschale definierte Winkel im Wesentlichen im Bereich von 85° bis 95° liegt, wobei die Länge des jeweiligen Flansches der zweiten Blechschale ein Vielfaches seiner maximalen Höhe beträgt, wobei der Steg der zweiten Blechschale im Bereich des jeweiligen Flansches der zweiten Blechschale eine Stegkante aufweist, und wobei die erste Blechschale und die zweite Blechschale an ihren Flanschen im Stumpfstoß miteinander verschweißt sind.

Chassis-Bauteile, insbesondere Fahrwerkslenker (Querlenker), sind in verschiedenen Ausführungen bekannt, insbesondere in Ausführungen, die einen einschaligen Grundkörper aufweisen, und auch in Ausführungen, die einen aus zwei oder mehr Schalenteilen zusammengesetzten Grundkörper aufweisen. Diese Bauteile, insbesondere Querlenker, unterliegen beim Beschleunigen, bei der Kurvenfahrt und beim Bremsen dynamischen Beanspruchungen, woraus entsprechend hohe Anforderungen an die Strukturfestigkeit resultieren. Im Hinblick auf ein möglichst geringes Bauteilgewicht und eine hohe Bauteilfestigkeit besteht das Problem, das betreffende Chassis-Bauteil den von ihm aufzunehmenden Belastungen entsprechend auszulegen.

Aus der EP 2 918 430 A1 ist ein Fahrwerkslenker bekannt, der einen einschaligen Grundkörper aus Stahlblech aufweist, an dem mehrere Lagerbereiche zur Anbindung von Lagerelementen ausgebildet sind, mit denen der Grundkörper mit der Karosserie und einem beweglichen Teil einer Radaufhängung eines Kraftfahrzeuges verbindbar ist. Der Grundkörper hat zwei ineinander übergehende Arme, die eine Grundkörperebene und einen konkavförmigen Randbereich des Grundkörpers definieren, wobei sich der konkavförmige Randbereich von einem radseitigen Lagerbereich bis zu einem karosserieseitigen Lagerbereich erstreckt, relativ zu der Grundkörperebene abgewinkelt ist und entlang eines Bogenlängenabschnitts eine schräge Fläche in Form einer Fase aufweist, die im Querschnitt betrachtet mit einer an sie angrenzenden Fläche des abgewinkelten, konkavförmigen Randbereichs einen Winkel im Bereich von 25° bis 75° einschließt. Der so ausgeführte Randbereich des Grundkörpers soll bei vorgegebener oder beibehaltener Blechdicke die Formsteifigkeit des Lenkers erhöhen.

Die DE 20 2017 100 162 U1 offenbart einen Querlenker für eine Radaufhängung eines Fahrzeugs, mit einem Grundkörper, der als Hohlkörper aus zwei Blechschalenteilen zusammengesetzt ist. Die beiden Schalenteile haben abgewinkelte Ränder, so dass das jeweilige Schalenteil wenigstens abschnittsweise, im Querschnitt betrachtet, ein im Wesentlichen U-förmiges Profil aufweist. Ein Randabschnitt wenigstens eines der Schalenteile erstreckt sich in den Hohlraum des Hohlkörpers und ist dort als Verstärkungsflansch ausgebildet. Die beiden Schalenteile sind entlang ihrer jeweiligen Ränder mittels einer Schweißnaht miteinander verbunden, wobei der Verstärkungsflansch des wenigstens einen Schalenteils bevorzugt in einem Winkel von etwa 90° zu seinem sonstigen Randverlauf, entlang dessen die Schweißnaht verläuft, abgewinkelt ist. Hierdurch soll der Querlenker bei geringem Bauteilgewicht eine erhöhte Steifigkeit erhalten. Die Ränder der Schalenteile dieses Querlenkers sind im Überlappstoß aneinander gefügt.

Ein weiterer Querlenker in Schalenbauweise für eine Radaufhängung ist in der DE 100 11 845 A1 offenbart. Der Querlenker umfasst ein erstes Schalenteil und ein zweites Schalenteil, die mit ihren Außenrändern im Überlappstoß zu einem Hohlkörper zusammengefügt sind. Dabei ist zwischen zwei einander gegenüberliegenden Außenrandabschnitten des ersten und zweiten Schalenteils ein drittes Schalenteil eingefügt. Ein solcher Querlenker soll bei einem geringen Gewicht und einer hohen Tragfähigkeit einfach herstellbar sein. Die Schalenteile sind bevorzugt aus Stahlblech durch Tiefziehen hergestellt.

Wird Metallblech beispielsweise in ein Formteil mit L-förmigen oder U-förmigen Profilquerschnitt umgeformt, kann häufig eine teilweise Rückkehrbewegung des umgeformten Blechbereichs, wie etwa eines durch Umbiegen oder Tiefziehen gebildeten Flansches, festgestellt werden. Diese teilweise Rückkehrbewegung wird als Aufspringen oder auch als Rückfedern bezeichnet. Das Aufsprungverhalten von umgeformtem Stahlblech hängt im Wesentlichen von der chemischen Zusammensetzung und der Dicke des verwendeten Stahlblechs ab, wobei die Dicke je nach Stahlsorte durch bestimmte Toleranzbereiche beschränkt ist. Aus Gründen der Gewichtseinsparung werden im Automobilbau immer mehr Chassis-Bauteile wie Querlenker oder Hilfsrahmen aus sogenanntem AHS-Stahl (Advanced High Strength Steel) bzw. Kohlenstoffstahl, beispielsweise aus Komplexphasenstahl gefertigt. Dabei führt das ausgeprägte Aufsprungverhalten von Stahlblechen mit Zugfestigkeiten Rm von bis 1200 MPa und Streckgrenzen Re bis zu 650 MPa zu Problemen bei der Maßhaltigkeit der abgewinkelten Ränder (Flansche) der Blechschalenteile. Nicht maßgerecht umgeformte Blechschalenränder, insbesondere Flansche, erschweren die Weiterverarbeitung, wie beispielsweise die stoffschlüssige Verbindung zweier Lenker- oder Hilfsrahmenschalen mittels Schweißen, insbesondere wenn die Schalenteile im Stumpfstoß aneinandergefügt werden sollen.

Die WO 2018/124601 A1 offenbart einen Querlenker, mit einem annähernd Y-förmig ausgebildeten Querlenkerkörper, wobei an den freien Enden der Arme des Querlenkerkörpers Lagerbuchsen befestigt sind. Der jeweilige Arm des Querlenkerkörpers hat ein im Wesentlichen C-förmiges Querschnittprofil mit einer oberen Wand, zwei Seitenwänden und zwei gebogenen Abschnitten, die sich zwischen der oberen Wand und je einer der beiden Seitenwände befinden. Des Weiteren umfasst der Querlenkerkörper mindestens einen Flansch, der sich an einem Ende einer der Seitenwände befindet und relativ zu dieser nach innen gebogen ist. Das Verfahren zum Herstellen des Querlenkerkörpers umfasst: einen Schritt zum Biegen eines Endes einer Platte aus einem Metallmaterial, um einen Flansch zu bilden; und einen Schritt zum Bilden einer oberen Wand und einer Seitenwand durch Bilden eines gebogenen Abschnitts durch Biegen der Platte aus einem Metallmaterial an einer Position, die auf der Metallplatte einen vorbestimmten Abstand von dem Flansch hat. In dem Schritt zum Bilden der oberen Wand und der Seitenwand wird die Seitenwand in Bezug auf die obere Wand in einem stumpfen Winkel gebildet. In einer Ausführungsformen umfasst die obere Wand eine erste obere Wand und eine zweite obere Wand, wobei die zweite obere Wand tiefer angeordnet ist als die erste obere Wand und durch einen Stufenabschnitt mit der ersten oberen Wand verbunden ist. Durch den Stufenabschnitt können die Torsions- und die Biegesteifigkeit der Arme in Längsrichtung verbessert werden.

Die EP 1 557 301 A2 offenbart den Oberbegriff des Anspruchs 1 und beschreibt einen als Hohlkörper ausgebildeten Vierpunktlenker, wobei explizit angegeben ist, dass die Gesamtgeometrie des Hohlkörpers im Hinblick auf die geforderte Steifigkeit, maximale Lebensdauer, Betriebsbeanspruchung und minimales Gewicht optimiert ist.

Die EP 2 191 989 A1 offenbart einen aus zwei Schalenelementen zusammengesetzten Vierpunktlenker. Die Schalenelemente weisen Wandbereiche mit Ausnehmungen auf, die im zusammengesetzten Zustand der Schalenelemente schlitzförmige Öffnungen in einer Symmetrieebene an den Hohlkörperwänden bilden. Bei diesem Vierpunktlenker wird bewusst zugelassen, dass die beiden Schalenelemente eine Relativbewegung zueinander ausführen, wobei die Bewegbarkeit nicht über Festverbindungen unterdrückt wird, wie es im Stand der Technik durch Schweißverbindungen der Fall ist.

DE 100 07 193 A1 offenbart einen zwischen seinen Enden mindestens partiell ausgeschäumten Querlenker, der aus zwei tiefgezogenen, dann miteinander verschweißten und anschließend ausgeschäumten Edelstahlschalen gebildet ist. Die zumindest partielle Ausschäumung erhöht die Knicksteifigkeit sowie die Beulsteifigkeit.

Die DE 100 53 411 A1 offenbart eine Fahrzeugachse, die in Form einer hohlen Schalenstruktur ausgebildet ist. Die Schalenstruktur ist durch eine obere Halbschale und eine untere Halbschale gebildet, die in einer zentralen horizontalen Ebene der Struktur zusammengeschweißt sind. Die Halbschalen sind dabei aber nicht aus umgeformtem Stahlblech sondern aus Stahlguss gefertigt.

Die DE 10 2008 056 271 A1 offenbart einen Querlenker in Blechkonstruktion mit zwei Blechschalen, die an zueinander abgewinkelten Randabschnitten miteinander verbunden, beispielsweise verschweißt sind und gemeinsam einen im Wesentlichen geschlossenen Hohlraum bilden. In einigen Ausführungsformen weisen die Blechschalen jeweils zumindest an einem Randabschnitt eine Auswölbung auf, so dass der Querschnitt des Querlenkers an dem betreffenden Randabschnitt eine größere Weite aufweist.

Davon ausgehend lag der Erfindung die Aufgabe zugrunde, ein Chassis-Bauteil der eingangs genannten Art hinsichtlich des Aufsprungverhaltens seiner durch Umformen abgewinkelten Flansche zu verbessern. Vorzugsweise soll sich das Chassis-Bauteil kostengünstig herstellen lassen und bei hoher Bauteilsteifigkeit, insbesondere hoher Formsteifigkeit ein geringes Gewicht aufweisen.

Diese Aufgabe wird erfindungsgemäß durch ein Chassis-Bauteil, beispielsweise einen Fahrwerkslenker oder Hilfsrahmen, mit den in Anspruch 1 angegebenen Merkmalen gelöst. Vorteilhafte Ausgestaltungen des erfindungsgemäßen Chassis-Bauteils sind in den Unteransprüchen angegeben.

Das erfindungsgemäße Chassis-Bauteil ist dadurch gekennzeichnet, dass das Stahlblech zumindest der ersten Blechschale aus Kohlenstoffstahl, vorzugsweise Komplexphasenstahl, oder presshärtbarem Stahl hergestellt ist und eine Zugfestigkeit Rm im Bereich von 750 bis 1500 MPa aufweist, dass der Steg der ersten Blechschale an mindestens einer seiner Stegkanten eine stufenförmige, entlang des dieser Stegkante zugeordneten Flansches verlaufende Verprägung aufweist, deren entlang des der Stegkante zugeordneten Flansches gemessene Länge oder Bogenlänge mindestens das 10-fache, vorzugsweise mindestens das 20-fache der durchschnittlichen Blechdicke der Blechschale und/oder mindestens 30% der Länge oder Bogenlänge des der Stegkante zugeordneten Flansches der ersten Blechschale beträgt, wobei diese Verprägung eine gegenüber einer äußeren Grundfläche des Steges im Wesentlichen parallele, tiefer liegende Stufengrundfläche definiert, wobei die Tiefe der Stufengrundfläche gegenüber der äußeren Grundfläche des Steges in einem Bereich liegt, dessen Untergrenze mindestens 0,3 mm beträgt und dessen Obergrenze höchstens der durchschnittlichen Blechdicke der Blechschale entspricht, und dass der Steg der zweiten Blechschale an mindestens einer seiner Stegkanten eine stufenförmige, entlang des dieser Stegkante zugeordneten Flansches verlaufende Verprägung aufweist, deren entlang des dieser Stegkante zugeordneten Flansches gemessene Länge oder Bogenlänge mindestens das 10-fache, vorzugsweise mindestens das 20-fache der durchschnittlichen Blechdicke der zweiten Blechschale und/oder mindestens 30% der Länge oder Bogenlänge des der Stegkante zugeordneten Flansches der zweiten Blechschale beträgt.

Durch die erfindungsgemäße Verprägung an der Stegkante der einstückigen Blechschale wird dem Aufsprungverhalten des sich an die Stegkante anschließenden Flansches vorteilhaft entgegengewirkt. Das erfindungsgemäße Chassis-Bauteil lässt sich dadurch mit hoher Maßhaltigkeit kostengünstig herstellen. Die Erfindung ermöglicht es, gattungsgemäße Chassis-Bauteile aus hochfestem Stahlblech, beispielsweise AHS-Stahlblech, maßhaltig zu formen und dabei einen bestimmten Winkel, vorzugsweise einen Winkel von annähernd 90°, zwischen Bauteilsteg und Bauteilflansch sicherzustellen.

Eine vorteilhafte Ausgestaltung der Erfindung sieht vor, dass bei der ersten Blechschale die Länge oder Bogenlänge der Verprägung mindestens 50%, vorzugsweise mindestens 70%, besonders bevorzugt mindestens 90% der Länge oder Bogenlänge des Flansches beträgt. Hierdurch lässt sich ein gattungsgemäßes Chassis-Bauteil mit besonders hoher Maßhaltigkeit kostengünstig herstellen. Vorzugsweise entspricht bei der ersten Blechschale die Länge oder Bogenlänge der Verprägung an mindestens einem der Flansche im Wesentlichen der Länge oder Bogenlänge dieses Flansches.

Dadurch, dass erfindungsgemäß bei der ersten Blechschale die Verprägung eine gegenüber einer äußeren Grundfläche des Steges im Wesentlichen parallele, tiefer liegende Stufengrundfläche definiert, wobei die Tiefe der Stufengrundfläche gegenüber der äußeren Grundfläche des Steges in einem Bereich liegt, dessen Untergrenze mindestens 0,3 mm beträgt und dessen Obergrenze höchstens der durchschnittlichen Blechdicke der Blechschale entspricht, lässt sich die Verprägung zur Optimierung der Maßhaltigkeit des Chassis-Bauteils relativ einfach und kostengünstig realisieren, und dies sowohl bei einem Chassis-Bauteil, dessen sich an die Verprägung anschließender Flansch eine relativ große Flankenhöhe aufweist, als auch bei einem Chassis-Bauteil, dessen sich an die Verprägung anschließender Flansch eine relativ kleine Flankenhöhe aufweist. Die Tiefe der Stufengrundfläche gegenüber der äußeren Grundfläche des Steges kann auch als Stufenhöhe oder Absatzmaß bezeichnet werden. Auch kann die Stufengrundfläche als gegenüber der äußeren Grundfläche des Steges abgesetzte Stufengrundfläche bezeichnet werden.

Des Weiteren ist es für eine Optimierung der Maßhaltigkeit des Chassis-Bauteils vorteilhaft, wenn gemäß einer Ausgestaltung der Erfindung bei der ersten Blechschale eine oder die von der Verprägung definierte, im Wesentlichen ebene Stufengrundfläche eine Abmessung aufweist, welche - in einer durch den Steg und den Flansch verlaufenden Querschnittsebene gemessen - mindestens das 0,5-fache, vorzugsweise mindestens das 0,8-fache der durchschnittlichen Blechdicke der ersten Blechschale beträgt. Diese Abmessung der Verprägung kann auch als Breite der im Wesentlichen ebenen Stufengrundfläche der Verprägung bezeichnet werden.

Nach einer weiteren vorteilhaften Ausgestaltung der Erfindung ist die Verprägung bei der ersten Blechschale dergestalt ausgebildet, dass der Steg in die Verprägung mit einem Biegeradius übergeht, welcher - in einer durch den Steg und den Flansch verlaufenden Querschnittsebene gemessen - mindestens das 0,5-fache, vorzugsweise mindestens das 0,8-fache der durchschnittlichen Blechdicke der ersten Blechschale beträgt. Der Biegeradius und damit der Verformungsgrad des Stahlblechs zur Herstellung der Verprägung sind somit vergleichsweise gering, wodurch sich bei der Herstellung der Verprägung eine Rissbildung im Stahlblech zuverlässig vermeiden lässt.

Eine weitere Ausgestaltung der Erfindung ist dadurch gekennzeichnet, dass der jeweilige Flansch an seiner Außenseite eine im Wesentlichen ebene Flanke aufweist, deren Flankenhöhe mindestens 1,5 mm beträgt oder größer als die durchschnittliche Blechdicke der ersten Blechschale ist. Damit lassen sich bei kompakten Bauteilabmessungen und geringem Bauteilgewicht hohe Bauteilfestigkeitswerte sowie eine hohe Bauteilmaßhaltigkeit erzielen.

Nach einer weiteren Ausgestaltung weist die erste Blechschale des erfindungsgemäßen Bauteils mindestens zwei als Anbindungsstellen ausgeführte Aufnahmen auf, wobei die jeweilige Aufnahme zwischen den Flanschen der einstückigen ersten Blechschale angeordnet ist. Diese Ausgestaltung ist insbesondere günstig, um bei geringem Bauteilgewicht eine hohe Bauteilfestigkeit zu erzielen.

Vorzugsweise hat die erste einstückige Blechschale des erfindungsgemäßen Chassis-Bauteils zwei Stegkanten, die jeweils eine Verprägung aufweisen, welche entsprechend der in den oben genannten Ausgestaltungen der Erfindung spezifizierten Verprägung der ersten Blechschale ausgeführt ist.

Das erfindungsmäße Chassis-Bauteil hat mindestens eine zweite oder weitere einstückige Blechschale, die einen Steg und seitliche, gegenüber dem Steg abgewinkelte Flansche aufweist, wobei der von dem Steg und dem Flansch definierte Winkel im Wesentlichen im Bereich von 85° bis 95° liegt, wobei die Länge des Flansches ein Vielfaches seiner maximalen Höhe beträgt, wobei der Steg im Bereich des Flansches eine Stegkante aufweist, und wobei die Blechschale und die weitere Blechschale an ihren Flanschen im Stumpfstoß miteinander verschweißt sind. Das erfindungsgemäße Chassis-Bauteil bietet aufgrund seines aus mindestens zwei einstückigen, im Stumpfstoß miteinander verschweißten Blechschalen zusammengesetzten Hohlkörpers die Möglichkeit, bei geringem Bauteilgewicht die Bauteilfestigkeit zu verbessern.

Erfindungsgemäß weist auch der Steg der zweiten oder weiteren Blechschale an der Stegkante eine stufenförmige, entlang des Flansches verlaufende Verprägung auf, deren entlang des Flansches gemessene Länge oder Bogenlänge mindestens das 10-fache, vorzugsweise mindestens das 20-fache der durchschnittlichen Blechdicke der Blechschale und/oder mindestens 30% der Länge oder Bogenlänge des Flansches beträgt. Hierdurch lässt sich das als Hohlkörper ausgeführte Chassis-Bauteil mit sehr guter Maßhaltigkeit kostengünstig herstellen. Hierfür ist es auch vorteilhaft, wenn nach einer bevorzugten Ausgestaltung der Erfindung die eine Blechschale und die zweite Blechschale im Wesentlichen spiegelsymmetrisch zueinander ausgebildet sind.

Um ein möglichst geringes Bauteilgewicht bei hoher Bauteilsteifigkeit zu erzielen, sieht die Erfindung vor, dass das Stahlblech zumindest der ersten Blechschale aus Kohlenstoffstahl, vorzugsweise Komplexphasenstahl, oder presshärtbarem Stahl hergestellt ist und eine Zugfestigkeit Rm im Bereich von 750 bis 1500 MPa aufweist. Auch ist es hierfür vorteilhaft, wenn das Stahlblech eine Zugfestigkeit Rm vorzugsweise im Bereich von 1000 bis 1500 MPa aufweist, und/oder wenn das Stahlblech eine Streckgrenze Re im Bereich von 400 bis 800 MPa, vorzugsweise im Bereich von 550 bis 800 MPa aufweist.

Die einstückige Blechschale des erfindungsmäßen Chassis-Bauteils ist vorzugsweise durch Tiefziehen eines Stahlblechs bzw. einer Stahlblechplatine hergestellt.

Nachfolgend wird die Erfindung anhand einer Ausführungsbeispiele darstellenden Zeichnung näher erläutert. Es zeigen:
- Fig. 1: ein Chassis-Bauteil in Form eines Fahrwerkslenkers, mit einem aus einstückigen Blechschalen zusammengesetzten Grundkörper (Hohlkörper) in einer perspektivischen Darstellung, und eine vergrößerte Detaildarstellung des Fahrwerkslenkers;
- Fig. 2: den Grundkörper des Fahrwerkslenkers aus Fig. 1 in einer Querschnittansicht entlang der Schnittlinie II-II in Fig. 1;
- Fig. 3: den Grundkörper des Fahrwerkslenkers aus Fig. 1 in einer Querschnittansicht entlang der Schnittlinie III-III in Fig. 1;
- Fig. 4: eine herkömmliche einstückige Blechschale mit einem zumindest abschnittsweise U-förmigen Querschnittsprofil in einer Querschnittansicht; und
- Fig. 5: eine einstückige Blechschale als Bestandteil oder Grundkörper eines erfindungsgemäßen Chassis-Bauteils, mit einem zumindest abschnittsweise U-förmigen Querschnittsprofil in einer Querschnittansicht, und eine vergrößerte Detaildarstellung der Blechschale.

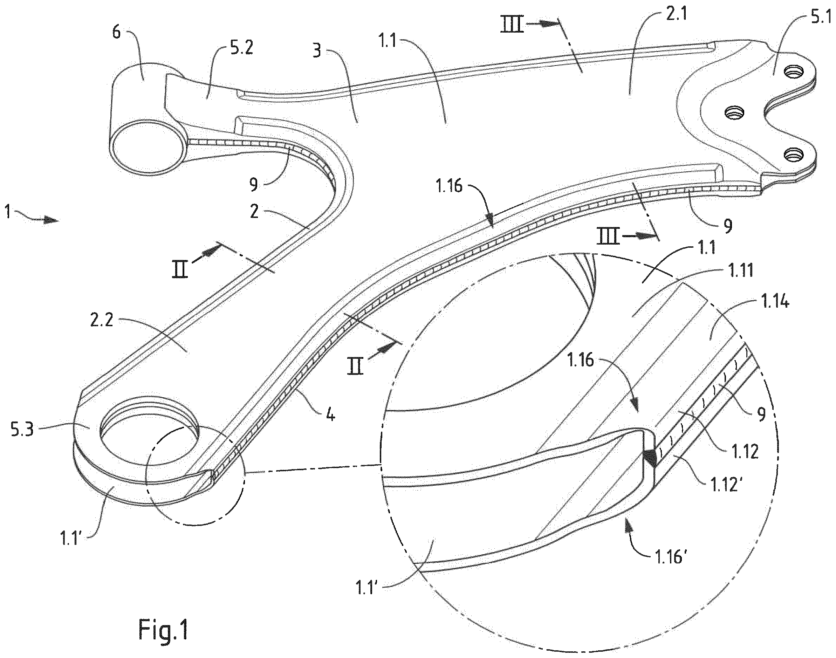

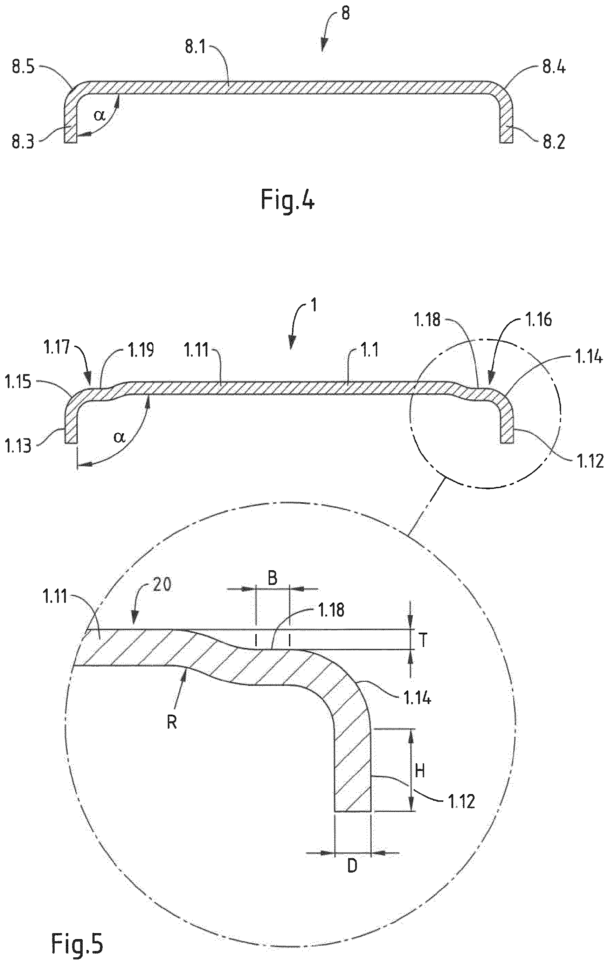

Ein erfindungsgemäßes Bauteil für ein Kraftfahrzeug, beispielsweise ein Karosserie- oder Chassis-Bauteil 1, weist eine aus umgeformtem Stahlblech gebildete einstückige Blechschale 1.1 auf (vgl. Fig. 1 und 5). Die Herstellung der einstückigen Blechschale 1.1 erfolgt beispielsweise durch Tiefziehen einer Stahlblechplatine. Die durchschnittliche Blechdicke der Blechschale 1.1 liegt beispielsweise in einem Bereich von 2 mm bis 6 mm.

Das Stahlblech der Blechschale 1.1 ist aus Kohlenstoffstahl, vorzugsweise Komplexphasenstahl, oder presshärtbarem Stahl hergestellt. Das Stahlblech hat eine Streckgrenze Re im Bereich von 400 bis 800 MPa, vorzugsweise im Bereich von 550 bis 800 MPa, und/oder eine Zugfestigkeit Rm im Bereich von 750 bis 1500 MPa, vorzugsweise im Bereich von 1000 bis 1500 MPa.

Die Blechschale 1.1 hat einen Steg 1.11 und seitliche, relativ zu dem Steg abgewinkelte Flansche 1.12, 1.13 (vgl. Fig. 5). Der von dem Steg 1.11 und dem Flansch 1.12 oder 1.13 definierte Winkel α liegt im Wesentlichen im Bereich von 85° bis 95° und beträgt vorzugsweise ca. 90°. Der Steg 1.11 weist im Bereich des Flansches 1.12, 1.13 eine Stegkante 1.14, 1.15 auf. Die Stegkante 1.14, 1.15 ist durch den Steg 1.11 und den relativ zu dem Steg 1.11 abgewinkelten Flansch 1.12, 1.13 definiert. Die Länge des Flansches 1.12, 1.13 beträgt ein Vielfaches seiner maximalen Höhe.

Erfindungsgemäß weist der Steg 1.11 an mindestens einer der Stegkanten 1.14, 1.15 eine stufenförmige, entlang des Flansches 1.12, 1.13 verlaufende Verprägung 1.16, 1.17 auf, deren entlang des Flansches 1.12, 1.13 gemessene Länge oder Bogenlänge mindestens das 10-fache, vorzugsweise mindestens das 20-fache der durchschnittlichen Blechdicke der Blechschale 1.1 und/oder mindestens 30% der Länge oder Bogenlänge des Flansches 1.12, 1.13 beträgt. Die Verprägung 1.16,1.17 befindet sich unmittelbar an der Stegkante 1.14, 1.15 des Flanschbereichs. Vorzugsweise wird die Verprägung 1.16, 1.17 nur durch Aufnahmen für Lager oder für sonstige Befestigungselemente unterbrochen.

Wie sich insbesondere der Fig. 5 entnehmen lässt, definiert die Verprägung 1.16,1.17 eine relativ zu der äußeren Grundfläche des Steges 1.11 im Wesentlichen parallele, tiefer liegende Stufengrundfläche 1.18, 1.19. Die Stufengrundfläche 1.18, 1.19 ist vorzugsweise im Wesentlichen eben ausgebildet. Die Tiefe T der Stufengrundfläche 1.18, 1.19 relativ zu der äußeren Grundfläche 1.20 des Steges 1.11 liegt in einem Bereich, dessen Untergrenze mindestens 0,3 mm beträgt und dessen Obergrenze höchstens der durchschnittlichen Blechdicke D der Blechschale 1.1 entspricht.

Die im Wesentlichen ebene Stufengrundfläche 1.18, 1.19 hat eine Abmessung B, welche in einer durch den Steg 1.11 und den Flansch 1.12, 1.13 verlaufenden Querschnittsebene der Blechschale 1.1 gemessen mindestens das 0,5-fache, vorzugsweise mindestens das 0,8-fache der durchschnittlichen Blechdicke D der Blechschale 1.1 beträgt. Die Abmessung B der Stufengrundfläche 1.18, 1.19 kann auch als Breite der Stufengrundfläche 1.18, 1.19 bezeichnet werden.

Die Verprägung 1.16, 1.17 ist dergestalt ausgebildet, dass der Steg 1.11 in die Verprägung 1.16, 1.17 mit einem Biegeradius R übergeht, der in einer durch den Steg 1.11 und den Flansch 1.12, 1.13 verlaufenden Querschnittsebene gemessen mindestens das 0,5-fache, vorzugsweise mindestens das 0,8-fache der durchschnittlichen Blechdicke D der Blechschale 1.1 beträgt.

Der Flansch 1.12, 1.13 hat an seiner Außenseite eine im Wesentlichen ebene Flanke, deren Flankenhöhe H mindestens 1,5 mm beträgt oder größer als die durchschnittliche Blechdicke D der Blechschale 1.1 ist.

Die in Fig. 5 gezeigte Blechschale 1.1 hat zwei Stegkanten 1.14, 1.15, die jeweils eine Verprägung 1.16, 1.17 aufweisen, wobei die beiden Verprägungen 1.16,1.17 der Blechschale 1.1 vorzugsweise im Wesentlichen gleichartige zueinander ausgeführt sind.

Vorzugsweise hat die jeweilige einstückige Blechschale 1.1 mindestens zwei als Anbindungsstellen ausgeführte Aufnahmen (in Fig. 5 nicht gezeigt), wobei jede der Aufnahmen zwischen den Flanschen 1.12, 1.13 angeordnet ist.

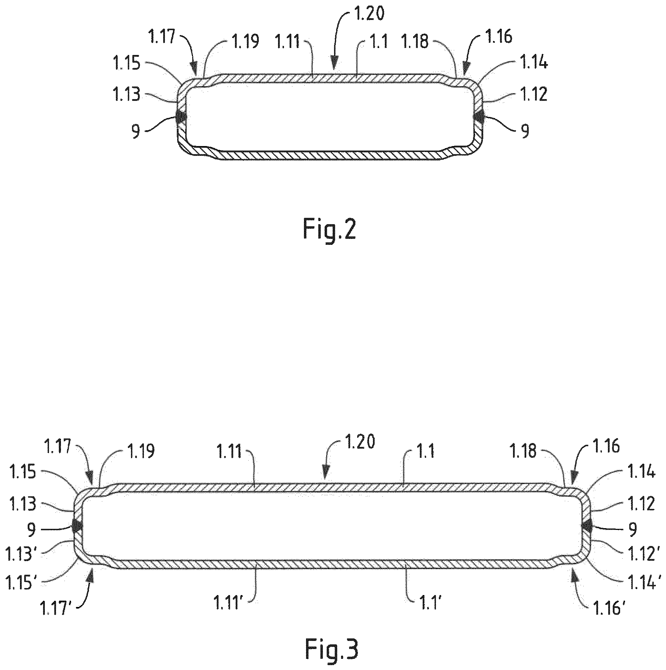

Das in den Figuren 1 bis 3 dargestellte Ausführungsbeispiel des erfindungsgemäßen Bauteils 1 für ein Kraftfahrzeug, hier in Form eines Fahrwerkslenkers, weist einen Grundkörper 2 auf. Der Grundkörper 2 hat beispielsweise zwei ineinander übergehende Arme 2.1, 2.2, die eine Grundkörperebene 3 und einen konkavförmigen Randbereich 4 definieren.

An dem Grundkörper 2 sind Lagerbereiche 5.1, 5.2, 5.3 zur Anbindung von Lagerelementen ausgebildet. Eines der Lagerelemente ist eine Bundbuchse 6, die an dem Lagerbereich 5.2 angeschweißt wird und eine gummiummantelte Lagerbuchse (nicht gezeigt) aufnimmt. An dem radseitigen Lagerbereich 5.1 wird ein Lagerzapfen (nicht gezeigt) montiert, der typischerweise als Kugelgelenk ausgebildet ist. Der als Lagerauge ausgebildete Lagerbereich 5.3 dient der Aufnahme eines Gummikörpers (nicht gezeigt), der eine Lagerbuchse (Bundbuchse) form- und stoffschlüssig umschließt. Der konkavförmige Randbereich 4 des Grundkörpers 2 erstreckt sich von dem radseitigen Lagerbereich 5.1 bis zu einem karosserieseitigen Lagerbereich 5.3.

Der Grundkörper 2 des Fahrwerkslenkers ist beispielsweise aus zwei einstückigen Blechschalen 1.1, 1.1' zusammengesetzt. Die Blechschalen 1.1, 1.1' sind jeweils aus umgeformtem Stahlblech gebildet und miteinander stoffschlüssig verbunden, vorzugsweise an ihren Flanschen 1.12, 1.12', 1.13, 1.13` im Stumpfstoß miteinander verschweißt. Mit 9 sind Schweißnähte bezeichnet.

Die beiden Blechschalen 1.1, 1.1' sind beispielsweise im Wesentlichen spiegelsymmetrisch zueinander ausgebildet. Vorzugsweise sind beide Blechschalen 1.1, 1.1' derart ausgeführt, dass der Steg 1.11, 1.11` der jeweiligen Blechschale 1.1, 1.1' an der Stegkante 1.14, 1.15, 1.14', 1.15` eine stufenförmige, entlang des Flansches 1.12, 1.13, 1.12', 1.13` verlaufende Verprägung 1.16, 1.17, 1.16`, 1.17' aufweist. Die entlang des Flansches 1.12, 1.13, 1.12', 1.13' gemessene Bogenlänge der Verprägung 1.16, 1.17, 1.16', 1.17' beträgt mindestens das 10-fache, vorzugsweise mindestens das 20-fache der durchschnittlichen Blechdicke D der Blechschale 1.1, 1.1' und/oder mindestens 30% der Bogenlänge des Flansches 1.12, 1.13, 1.12', 1.13`. In dem Ausführungsbeispiel gemäß den Figuren 1 bis 3 beträgt die Bogenlänge der jeweiligen Verprägung 1.16, 1.17, 1.16', 1.17' beispielsweise mehr als 70%, vorzugsweise mehr als 80% der Bogenlänge des sich an die Verprägung 1.16, 1.17, 1.16`, 1.17' anschließenden Flansches 1.12, 1.13, 1.12', 1.13`.

Die Blechschalen 1.1, 1.1' können auch als erste einstückige Blechschale 1.1 und als weitere einstückige Blechschale 1.1`, insbesondere zweite einstückige Blechschale 1.1' bezeichnet werden. Die beiden Blechschalen 1.1, 1.1' können, abweichend von dem in den Figuren 1 bis 3 gezeigten Ausführungsbeispiel, auch unterschiedlich zueinander ausgebildet sein. Beispielsweise kann lediglich eine der Blechschalen 1.1, 1.1`, vorzugsweise die untere Blechschale 1.1`, in ihrem Steg 1.11' eine zwischen den Lagerbereichen 5.1, 5.2, 5.3 angeordnete Durchgangsöffnung (nicht gezeigt) aufweisen.

Die Ausführung der Erfindung ist nicht auf die in der Zeichnung dargestellten Ausführungsbeispiele beschränkt. Vielmehr sind zahlreiche Varianten denkbar, die auch bei von diesen Beispielen abweichender Gestaltung von der in den beiliegenden Ansprüchen angegebenen Erfindung Gebrauch machen. Beispielsweise kann der Grundkörper 2 des erfindungsgemäßen Chassis-Bauteils 1 auch aus mehr als zwei einstückigen Blechschalen 1.1, 1.1` zusammengesetzt werden. Ferner kann ein erfindungsgemäßes Chassis-Bauteil auch als Hilfsrahmen für ein Kraftfahrzeug oder als Komponente, insbesondere als Längsträger oder Querträger eines solchen Hilfsrahmens ausgeführt werden.

## Patentansprüche

1. Chassis-Bauteil (1) für ein Kraftfahrzeug, insbesondere in Form eines Fahrwerkslenkers oder Hilfsrahmens, mit einer ersten aus umgeformtem Stahlblech gebildeten einstückigen Blechschale (1.1), die einen Steg (1.11) und seitliche, gegenüber dem Steg abgewinkelte Flansche (1.12, 1.13) aufweist, wobei der von dem Steg (1.11) und dem jeweiligen Flansch (1.12, 1.13) definierte Winkel (α) im Wesentlichen im Bereich von 85° bis 95° liegt, wobei die Länge des jeweiligen Flansches ein Vielfaches seiner maximalen Höhe beträgt, und wobei der Steg (1.11) im Bereich des jeweiligen Flansches eine Stegkante (1.14, 1.15) aufweist, und mit mindestens einer zweiten einstückigen Blechschale (1.1'), die einen Steg (1.11') und seitliche, gegenüber diesem Steg (1.11') abgewinkelte Flansche (1.12', 1.13') aufweist, wobei der von dem Steg (1.11') und dem jeweiligen Flansch (1.12', 1.13') der zweiten Blechschale (1.1') definierte Winkel (α) im Wesentlichen im Bereich von 85° bis 95° liegt, wobei die Länge des jeweiligen Flansches (1.12', 1.13') der zweiten Blechschale (1.1') ein Vielfaches seiner maximalen Höhe beträgt, wobei der Steg (1.11') der zweiten Blechschale (1.1') im Bereich des jeweiligen Flansches (1.12', 1.13') der zweiten Blechschale (1.1') eine Stegkante (1.14', 1.15') aufweist, und wobei die erste Blechschale (1.1) und die zweite Blechschale (1.1') an ihren Flanschen (1.12, 1.13, 1.12', 1.13') im Stumpfstoß miteinander verschweißt sind, **dadurch gekennzeichnet, dass** das Stahlblech zumindest der ersten Blechschale (1.1, 1.1') aus Kohlenstoffstahl, vorzugsweise Komplexphasenstahl, oder presshärtbarem Stahl hergestellt ist und eine Zugfestigkeit Rm im Bereich von 750 bis 1500 MPa aufweist, dass der Steg (1.11) der ersten Blechschale (1.1) an mindestens einer seiner Stegkanten (1.14, 1.15) eine stufenförmige, entlang des dieser Stegkante (1.14, 1.15) zugeordneten Flansches (1.12, 1.13) verlaufende Verprägung (1.16,1.17) aufweist, deren entlang des der Stegkante (1.14, 1.15) zugeordneten Flansches (1.12, 1.13) gemessene Länge oder Bogenlänge mindestens das 10-fache, vorzugsweise mindestens das 20-fache der durchschnittlichen Blechdicke (D) der Blechschale (1.1) und/oder mindestens 30% der Länge oder Bogenlänge des der Stegkante (1.14, 1.15) zugeordneten Flansches (1.12, 1.13) der ersten Blechschale (1.1) beträgt, wobei diese Verprägung (1.16,1.17) eine gegenüber einer äußeren Grundfläche (1.20) des Steges (1.11) im Wesentlichen parallele, tiefer liegende Stufengrundfläche (1.18, 1.19) definiert, wobei die Tiefe (T) der Stufengrundfläche (1.18, 1.19) gegenüber der äußeren Grundfläche (1.20) des Steges (1.11) in einem Bereich liegt, dessen Untergrenze mindestens 0,3 mm beträgt und dessen Obergrenze höchstens der durchschnittlichen Blechdicke (D) der ersten Blechschale (1.1) entspricht, und dass der Steg (1.11`) der zweiten Blechschale (1.1') an mindestens einer seiner Stegkanten (1.14', 1.15') eine stufenförmige, entlang des dieser Stegkante (1.14', 1.15') zugeordneten Flansches (1.12', 1.13') verlaufende Verprägung (1.16', 1.17') aufweist, deren entlang des dieser Stegkante (1.14', 1.15') zugeordneten Flansches (1.12', 1.13') gemessene Länge oder Bogenlänge mindestens das 10-fache, vorzugsweise mindestens das 20-fache der durchschnittlichen Blechdicke (D) der zweiten Blechschale (1.1') und/oder mindestens 30% der Länge oder Bogenlänge des der Stegkante (1.14', 1.15') zugeordneten Flansches (1.12', 1.13') der zweiten Blechschale (1.1') beträgt.

2. Chassis-Bauteil nach Anspruch 1, **dadurch gekennzeichnet, dass** bei der ersten Blechschale (1.1) die Länge oder Bogenlänge der Verprägung (1.16, 1.17) mindestens 50%, vorzugsweise mindestens 70%, besonders bevorzugt mindestens 90% der Länge oder Bogenlänge des der Stegkante (1.14, 1.15) zugeordneten Flansches (1.12, 1.13) beträgt.

3. Chassis-Bauteil nach Anspruch 1 oder 2, **dadurch gekennzeichnet, dass** bei der ersten Blechschale (1.1) die Länge oder Bogenlänge der Verprägung (1.16, 1.17) an mindestens einem der Flansche (1.12, 1.13) im Wesentlichen der Länge oder Bogenlänge dieses Flansches (1.12, 1.13) entspricht.

4. Chassis-Bauteil nach einem der Ansprüche 1 bis 3, **dadurch gekennzeichnet, dass** bei der ersten Blechschale (1.1) eine oder die von der Verprägung (1.16, 1.17) definierte im Wesentlichen ebene Stufengrundfläche (1.18, 1.19) eine Abmessung (B) aufweist, welche in einer durch den Steg (1.11) und den Flansch (1.12, 1.13) der ersten Blechschale (1.1) verlaufenden Querschnittsebene gemessen mindestens das 0,5-fache, vorzugsweise mindestens das 0,8-fache der durchschnittlichen Blechdicke (D) der ersten Blechschale (1.1) beträgt.

5. Chassis-Bauteil nach einem der Ansprüche 1 bis 4, **dadurch gekennzeichnet, dass** bei der ersten Blechschale (1.1) die Verprägung (1.16, 1.17) dergestalt ausgebildet ist, dass der Steg in die Verprägung mit einem Biegeradius (R) übergeht, welcher in einer durch den Steg und den Flansch (1.12, 1.13) verlaufenden Querschnittsebene gemessen mindestens das 0,5-fache, vorzugsweise mindestens das 0,8-fache der durchschnittlichen Blechdicke (D) der ersten Blechschale (1.1) beträgt.

6. Chassis-Bauteil nach einem der Ansprüche 1 bis 5, **dadurch gekennzeichnet, dass** bei der ersten Blechschale (1.1) der jeweilige Flansch (1.12,1.13) an seiner Außenseite eine im Wesentlichen ebene Flanke aufweist, deren Flankenhöhe (H) mindestens 1,5 mm beträgt oder größer als die durchschnittliche Blechdicke (D) der ersten Blechschale (1.1) ist.

7. Chassis-Bauteil nach einem der Ansprüche 1 bis 6, **dadurch gekennzeichnet, dass** die erste Blechschale (1.1) mindestens zwei als Anbindungsstellen ausgeführte Aufnahmen aufweisen, wobei die jeweilige Aufnahme zwischen den Flanschen (1.12,1.13) der ersten Blechschale (1.1) angeordnet ist.

8. Chassis-Bauteil nach einem der Ansprüche 1 bis 7, **dadurch gekennzeichnet, dass** die erste Blechschale (1.1) zwei Stegkanten (1.14, 1.15) hat, die jeweils eine Verprägung (1.16, 1.17) aufweisen, welche entsprechend der in einem der Ansprüche 1 bis 6 spezifizierten Verprägung (1.16, 1.17) der ersten Blechschale (1.1) ausgeführt ist.

9. Chassis-Bauteil nach einem der Ansprüche 1 bis 8, **dadurch gekennzeichnet, dass** die erste Blechschale (1.1) und die zweite Blechschale (1.1') im Wesentlichen spiegelsymmetrisch zueinander ausgebildet sind.

10. Chassis-Bauteil nach einem der Ansprüche 1 bis 9, **dadurch gekennzeichnet, dass** das Stahlblech eine Zugfestigkeit Rm im Bereich von 1000 bis 1500 MPa aufweist.

11. Chassis-Bauteil nach einem der Ansprüche 1 bis 10, **dadurch gekennzeichnet, dass** das Stahlblech eine Streckgrenze Re im Bereich von 400 bis 800 MPa, vorzugsweise im Bereich von 550 bis 800 MPa aufweist.

## Claims

1. Chassis component (1) for a motor vehicle, in particular in the form of a chassis control arm or subframe, having a first one-piece sheet-metal shell (1.1) which is formed from formed sheet steel and has a web (1.11) and lateral flanges (1.12, 1.13) which are angled with respect to the web, the angle (α) defined by the web (1.11) and the respective flange (1.12, 1.13) being substantially in the range of 85° to 95°, the length of the respective flange being a multiple of its maximum height, and the web (1.11) having in the region of the respective flange a web edge (1.14, 1.15), and with at least one second one-piece sheet-metal shell (1.1') which has a web (1.11') and lateral flanges (1.12', 1.13') which are angled with respect to this web (1.11'), wherein the angle (α) defined by the web (1.11') and the respective flange (1.12', 1.13') of the second sheet metal shell (1.1') being substantially in the range of 85° to 95°, the length of the respective flange (1.12', 1.13') of the second sheet metal shell (1.1') being a multiple of its maximum height, the web (1.11') of the second sheet metal shell (1.1') has a web edge (1.14', 1.15') in the region of the respective flange (1.12', 1.13') of the second sheet metal shell (1.1'), and wherein the first sheet metal shell (1.1) and the second sheet-metal shell (1.1') being butt-welded to one another at their flanges (1.12, 1.13, 1.12', 1.13'), **characterized in that** the steel sheet of at least the first sheet-metal shell (1.1, 1.1') is produced from carbon steel, preferably complex-phase steel, or press-hardenable steel and has a tensile strength Rm in the range from 750 to 1500 MPa, **in that** the web (1.11) of the first sheet-metal shell (1. 1) has, on at least one of its web edges (1.14, 1.15), a step-shaped embossing (1.16, 1.17) running along the flange (1.12, 1.13) associated with this web edge (1.14, 1.15), the length or arc length of which measured along the flange (1.12, 1.13) associated with the web edge (1.14, 1.15) is at least 10 times, preferably at least 20 times, the average sheet metal thickness (D) of the sheet metal shell (1.1) and/or at least 30% of the length or arc length of the flange (1.12, 1.13) of the first sheet metal shell (1.1) associated with the web edge (1.14, 1.15), this embossing (1.16,1.17) defining a step base surface (1.18, 1.19) which is substantially parallel and located at a lower level relative to the outer base surface (1.20) of the web (1.11), the depth (T) of the step base surface (1.18, 1.19) relative to the outer base surface (1.20) of the web (1.11) lies in a range whose lower limit is at least 0.3 mm and whose upper limit corresponds at most to the average sheet thickness (D) of the first sheet metal shell (1.1), and **in that** the web (1.11') of the second sheet metal shell (1.1') has, on at least one of its web edges (1.14', 1.15'), a step-shaped embossment (1.16', 1.17') which runs along the flange (1.12', 1.13') associated with this web edge (1.14', 1.15') and whose length or arc length measured along the flange (1.12', 1.13') associated with this web edge (1.14', 1.15') is at least 10 times, preferably at least 20 times, the average sheet thickness (D) of the second sheet shell (1.1') and/or at least 30% of the length or arc length of the flange (1.12', 1.13') of the second sheet metal shell (1.1') associated with the web edge (1.14', 1.15').

2. Chassis component according to claim 1, **characterized in that**, in the first sheet-metal shell (1.1), the length or arc length of the embossing (1.16, 1.17) is at least 50%, preferably at least 70%, particularly preferably at least 90%, of the length or arc length of the flange (1.12, 1.13) associated with the web edge (1.14, 1.15).

3. Chassis component according to claim 1 or 2, **characterized in that**, in the first sheet metal shell (1.1), the length or arc length of the embossing (1.16,1.17) on at least one of the flanges (1.12, 1.13) essentially corresponds to the length or arc length of this flange (1.12, 1.13).

4. Chassis component according to any one of claims 1 to 3, **characterized in that**, in the first sheet-metal shell (1.1), one or the essentially planar step base surface (1.18,1.19) defined by the embossing (1.16,1.17) has a dimension (B) which when measured in a cross-sectional plane running through the web (1.11) and the flange (1.12, 1.13) of the first sheet metal shell (1.1) is at least 0.5 times, preferably at least 0.8 times, the average sheet metal thickness (D) of the first sheet metal shell (1.1).

5. Chassis component according to any one of claims 1 to 4, **characterized in that** in the first sheet metal shell (1.1) the embossing (1.16, 1.17) is designed in such a way that the web merges into the embossing with a bending radius ( R) which is measured in a cross-sectional plane running through the web and the flange (1.12, 1.13) is at least 0.5 times, preferably at least 0.8 times, the average sheet thickness (D) of the first sheet shell (1.1).

6. Chassis component according to any one of claims 1 to 5, **characterized in that**, in the first sheet-metal shell (1.1), the respective flange (1.12, 1.13) has on its outer side a substantially planar flank whose flank height (H) is at least 1.5 mm or greater than the average sheet-metal thickness (D) of the first sheet-metal shell (1.1).

7. Chassis component according to any one of claims 1 to 6, **characterized in that** the first sheet metal shell (1.1) has at least two receptacles designed as connection points, the respective receptacle being arranged between the flanges (1.12, 1.13) of the first sheet metal shell (1.1).

8. Chassis component according to any one of claims 1 to 7, **characterized in that** the first sheet metal shell (1.1) has two web edges (1.14, 1.15), each of which has an embossing (1.16, 1.17) which is designed in accordance with the embossing (1.16,1.17) of the first sheet metal shell (1.1) specified in one of claims 1 to 6.

9. Chassis component according to any one of claims 1 to 8, **characterized in that** the first sheet metal shell (1.1) and the second sheet metal shell (1.1') are formed substantially mirror-symmetrically with respect to one another.

10. Chassis component according to any one of claims 1 to 9, **characterized in that** the steel sheet has a tensile strength Rm in the range from 1000 to 1500 MPa.

11. Chassis component according to any one of claims 1 to 10, **characterized in that** the steel sheet has a yield strength Re in the range from 400 to 800 MPa, preferably in the range from 550 to 800 MPa.

## Revendications

1. Composant de châssis (1) pour un véhicule automobile, plus particulièrement en forme de bras de suspension ou de châssis auxiliaire, avec une première coque en tôle (1.1) d'une seule pièce formée en tôle d'acier transformée, qui présente une entretoise (1.11) et des brides (1.12, 1.13) latérales, coudées par rapport à l'entretoise, dans lequel l'angle (α) défini par l'entretoise (1.11) et la bride respective (1.12, 1.13) est essentiellement de l'ordre de 85° à 95°, dans lequel la longueur de la bride respective est un multiple de sa hauteur maximale, et dans lequel l'entretoise (1.11) présente un bord d'entretoise (1.14, 1.15) dans la zone de la bride respective, et avec au moins une deuxième coque en tôle d'une seule pièce (1.1') qui présente une entretoise (1.11') et des brides (1.12', 1.13') latérales, coudées par rapport à cette entretoise (1.11'), dans lequel l'angle (α) défini par l'entretoise (1.11') et la bride respective (1.12', 1.13') de la deuxième coque en tôle (1.1') est essentiellement de l'ordre de 85° à 95°, dans lequel la longueur de la bride respective (1.12', 1.13') de la deuxième coque en tôle (1.1') est un multiple de sa hauteur maximale, dans lequel l'entretoise (1.11') de la deuxième coque en tôle (1.1') dans la zone de la bride respective (1.12', 1.13') de la deuxième coque en tôle (1.1') présente un bord d'entretoise (1.14', 1.15'), et dans lequel la première coque en tôle (1.1) et la deuxième coque en tôle (1.1') sont soudées ensemble dans un joint abouté au niveau de leurs brides (1.12, 1.13, 1.12', 1.13'), **caractérisé en ce que** la tôle d'acier au moins de la première coque en tôle (1.1, 1.1') est fabriquée en acier au carbone, de préférence en acier à phase complexe, ou en acier durcissable à la presse et présente une résistance à la traction Rm de l'ordre de 750 à 1500 MPa, **en ce que** l'entretoise (1.11) de la première coque en tôle (1.1) présente sur au moins l'un de ses bords d'entretoise (1.14, 1.15) un estampage (1.16, 1.17) à gradins, passant le long de la bride (1.12, 1.13) affectée à ce bord d'entretoise (1.14, 1.15), dont la longueur mesurée le long de la bride (1.12, 1.13) affectée au bord d'entretoise (1.14, 1.15) ou longueur d'arc est au moins 10 fois, de préférence, au moins 20 fois l'épaisseur de tôle moyenne (D) de la coque en tôle (1.1) et/ou au moins 30 % de la longueur ou longueur d'arc de la bride (1.12, 1.13) affectée au bord d'entretoise (1.14, 1.15) de la première coque en tôle (1.1), dans lequel cet estampage (1.16, 1.17) définit une surface de base à gradins (1.18, 1.19) essentiellement parallèle par rapport à une surface de base externe (1.20) de l'entretoise (1.11), située plus bas, dans lequel la profondeur (T) de la surface de base à gradins (1.18,1.19) par rapport à la surface de base externe (1.20) de l'entretoise (1.11) se situe dans une plage, dont la limite inférieure est d'au moins 0,3 mm et dont la limite supérieure correspond au maximum à l'épaisseur de tôle moyenne (D) de la première coque en tôle (1.1), et **en ce que** l'entretoise (1.11') de la deuxième coque en tôle (1.1') présente un estampage (1.16', 1.17') à gradins, passant le long de la bride (1.12', 1.13') affectée à ce bord d'entretoise (1.14', 1.15'), dont la longueur mesurée le long de la bride (1.12', 1.13') affectée à ce bord d'entretoise (1.14', 1.15') ou longueur d'arc est au moins 10 fois, de préférence, au moins 20 fois l'épaisseur de tôle moyenne (D) de la deuxième coque en tôle (1.1') et / ou au moins 30 % de la longueur ou longueur d'arc de la bride (1.12', 1.13') affectée au bord d'entretoise (1.14', 1.15') de la deuxième coque en tôle (1.1').

2. Composant de châssis selon la revendication 1, **caractérisé en ce que** dans la première coque en tôle (1.1) la longueur ou longueur d'arc de l'estampage (1.16, 1.17) est au moins 50 %, de préférence au moins 70 %, de préférence encore au moins 90 % de la longueur ou longueur d'arc de la bride (1.12, 1.13) affectée au bord d'entretoise (1.14, 1.15).

3. Composant de châssis selon la revendication 1 ou 2, **caractérisé en ce que** dans la première coque en tôle (1.1) la longueur ou longueur d'arc de l'estampage (1.16, 1.17) correspond à au moins l'une des brides (1.12, 1.13) essentiellement à la longueur ou à la longueur d'arc de cette bride (1.12, 1.13).

4. Composant de châssis selon l'une des revendications 1 à 3, **caractérisé en ce que** dans la première coque en tôle (1.1) une ou la surface de base à gradins (1.18, 1.19) essentiellement plane définie par l'estampage (1.16, 1.17) présente une dimension (B), laquelle mesurée dans un plan transversal passant par l'entretoise (1.11) et la bride (1.12, 1.13) de la première coque en tôle (1.1) est au moins de 0,5 fois, de préférence, au moins 0,8 fois, l'épaisseur de tôle moyenne (D) de la première coque en tôle (1.1).

5. Composant de châssis selon l'une des revendications 1 à 4, **caractérisé en ce que** dans la première coque en tôle (1.1) l'estampage (1.16, 1.17) est conçu de telle sorte que l'entretoise passe dans l'estampage avec un rayon de courbure (R), lequel mesuré dans un plan transversal passant par l'entretoise et la bride (1.12, 1.13) est au moins de 0,5 fois, de préférence, au moins 0,8 fois, l'épaisseur de tôle moyenne (D) de la première coque en tôle (1.1).

6. Composant de châssis selon l'une des revendications 1 à 5, **caractérisé en ce que** dans la première coque en tôle (1.1) la bride respective (1.12, 1.13) présente sur son côté externe un flanc essentiellement plan, dont la hauteur de flanc (H) est au moins de 1,5 mm ou est supérieure à l'épaisseur de tôle moyenne (D) de la première coque en tôle (1.1).

7. Composant de châssis selon l'une des revendications 1 à 6, **caractérisé en ce que** la première coque en tôle (1.1) présente au moins deux logements réalisés comme des points de liaison, dans lequel le logement respectif est disposé entre les brides (1.12, 1.13) de la première coque en tôle (1.1).

8. Composant de châssis selon l'une des revendications 1 à 7, **caractérisé en ce que** la première coque en tôle (1.1) a deux bords d'entretoise (1.14, 1.15) qui présentent à chaque fois un estampage (1.16, 1.17), lequel est réalisé conformément à l'estampage (1.16, 1.17) spécifié dans l'une des revendications 1 à 6, de la première coque en tôle (1.1).

9. Composant de châssis selon l'une des revendications 1 à 8, **caractérisé en ce que** la première coque en tôle (1.1) et la deuxième coque en tôle (1.1') sont réalisées essentiellement symétriquement l'une par rapport à l'autre.

10. Composant de châssis selon l'une des revendications 1 à 9, **caractérisé en ce que** la tôle d'acier présente une résistance à la traction Rm de l'ordre de 1000 à 1500 MPa.

11. Composant de châssis selon l'une des revendications 1 à 10, **caractérisé en ce que** la tôle d'acier présente une limite d'élasticité Re de l'ordre de 400 à 800 MPa, de préférence, de l'ordre de 550 à 800 MPa.
